# EUROPEAN PATENT SPECIFICATION

(11) **EP 3 771 857 B1**
(45) Date of publication and mention of the grant of the patent: **07.06.2023**
(21) Application number: 20188789.0
(22) Date of filing: 30.07.2020
(51) Int. Cl.: F16L 55/00, H01R 4/02, H01R 4/18, F16L 35/00, F16G 11/02, F16G 11/14, B23K 9/167, B23K 101/32

(54) **A SYSTEM OF A CABLE, CABLE LUG AND HOSE FOR RESTRAINING SAID HOSE**
SYSTEM AUS EINEM KABEL, KABELSCHUH UND SCHLAUCH ZUM ZURÜCKHALTEN DES SCHLAUCHS
SYSTÈME AVEC UN CABLE, UNE COSSE DE CÂBLE ET UN TUYAU PERMETTANT DE RETENIR LE TUYAU

(30) Priority: 30.07.2019 IT 201900002610 U
(43) Date of publication of application: 03.02.2021
(73) Proprietor: Barnini, Francesca, 50018 Scandicci Florence (IT)
(72) Inventor: BARNINI, Franco Riccardo, 50055 Lastra a Signa (IT)
(74) Representative: ABM Agenzia Brevetti & Marchi

(56) References cited:
- EP-A1- 1 891 364
- EP-A2- 1 124 284
- JP-A- 2009 187 683
- US-A- 3 197 829
- US-A- 3 656 092
- US-A- 4 966 565

## Description

### Field of the invention

The present invention relates to device for restraining flexible tubes or hoses containing high pressure fluids from whipping in case of accidental rupture .

The invention also relates to a method for making the terminal element of a cable for restraining the high-pressure hoses.

### Description of the prior art

Devices for restraining flexible tubes or hoses, hereinafter defined as hoses, containing high pressure fluids from whipping in case of accidental rupture are known in the art. They are used for restraining the hoses with very high-pressure fluids, like gases or liquids up to hundreds of bars. Such hoses, in case of rupture, can whip and be very dangerous.

In certain types a metal rope or metal cable, hereinafter defined as cable, is used with at least an end connector also called cable lug. In particular the cable lugs is provided at one end or at both ends of the metal cable and is used to restrain the end fitting of the hose, which is normally fixed to high pressure air or liquid passages or to other end fittings of continuing hoses.

One type of cable lug is a flat plate with a hole. Such kind of end fitting has the advantage of a safe connection with a screw threaded end of the end fitting of the high-pressure hose or tube, as disclosed in DE10357793A1 FR2286982A1 GB2051905A. Normally, the end of the metal rope is connected to the cable lug by crimping using a crimping tool. The disadvantage of this solution is that the resistance of the crimped connection is normally much lower than the resistance of the cable. Therefore, the reliability of such crimped connection is not high.

In other solutions the cable lug is formed by end of the cable which is bent to form a loop, and then the cable end and a portion of the cable are fixed together, by a blocking device, as disclosed for example in US2006218756A1, or WO2013149631A1, or WO2006100702A1. Such solutions form a cable lug having the same resistance of the cable. However, such looped cable lug is not easy to fix to the hose end fitting, since the loop can be deformed.

In JP2009187683 in order to avoid weakening of an electric joint in case of heating during electric power transmission, a crimped portion of an electric connector body includes a welded portion.

### Summary of the invention

It is therefore a feature of the present invention to provide a cable lug of the type having a plate with a hole which provides much more resistance with respect to the prior art.

It is another a feature of the present invention to provide a method of manufacturing a cable lug of the type having a plate with a hole which provides such higher resistance

According to the invention, a system of a cable, a cable lug and a hose is provided, wherein the cable lug is made of a metal material and comprises an end plate portion, with an eyelet and a hollow shank, wherein the shank is defined by two opposite wings, wherein said wings are arranged to grip a terminal of a metal cable, wherein said hose has an end fitting and the end plate portion is arranged to fit the end fitting, and wherein the end wings of the shank are connected to each other and to the terminal of the cable by a weld bead .

Preferably, the end fitting comprises a screw threaded nut and eyelet end portion is configured to match a screw threaded hole of nut.

Preferably, the end fitting is secured to hose by a sleeve .

Advantageously, the hose is secured to the cable by ties .

Advantageously, the system comprises a hose with two end fittings and a cable with two cable lugs arranged at respective ends .

According to another aspect of the invention, a method for making the above system comprises the steps of:
- providing the hose, the cable lug and the cable, wherein making the cable lug comprises the steps of:
   - providing a flat shank blank portion connected to an end plate portion;
   - progressively bending the flat shank portion obtaining bent wings defining a tubular shank;
   - arranging a terminal of a cable in the shank;
   - further bending the wings up to gripping the cable ;
   - Welding said wings forming a weld bead connecting said wings.

Preferably, the terminal is welded together the wings forming said weld bead .

Advantageously a TIG welding process is used for the step of welding the wings.

Advantageously the weld bead is made to connect the wings of the shank and said cable at a portion of the shank facing the end plate portion.

### Brief description of the drawings

Further characteristic and/or advantages of the present invention will be made clearer with the following description of its exemplary embodiments, exemplifying but not limitative, with reference to the attached drawings in which:
- Fig. 1 shows perspectively a cable lug and a hose according to the invention;
- Fig. 2 shows perspectively a cable lug according to the invention;
- Fig. 3 shows perspectively a cable lug and hose with end fitting;
- Fig. 4 and 5 shows perspectively a cable lug and hose fitted to a part of a machine for conveying high pressure fluids;
- Fig. 6 shows perspectively a hose with two end fittings and a cable with two respective cable lugs at the ends connected together;
- Fig. 7 shows a partial perspective view of the connection between the hose and the cable of fig. 6;
- Fig. 8-15 show method steps for making the cable lug according to the previous figures.

### Description of some preferred exemplary embodiments

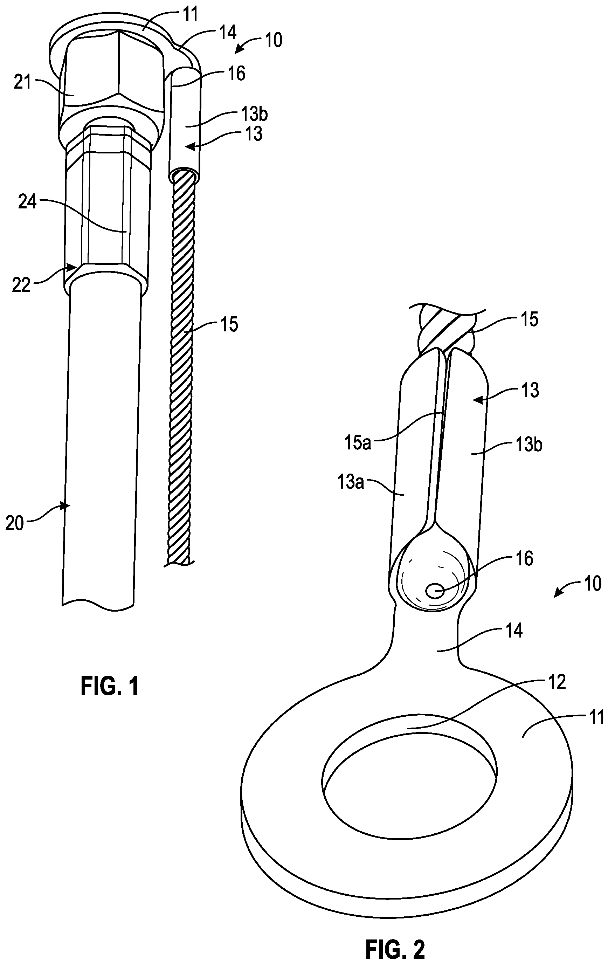

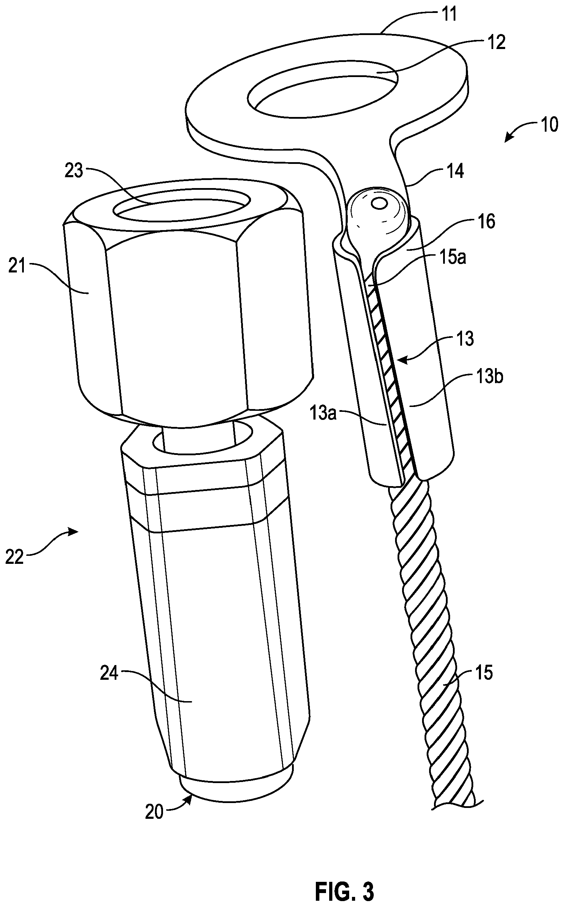

Fig. 1 -3 show a cable lug 10 according to the invention, made of a metal material, for example steel. Cable lug 10 has an end plate portion 11, with an eyelet 12 and a shank 13. The shank has two wings 13a and 13b. The wings 13a and 13b of shank 13 are arranged to house a terminal 15a of a metal cable 15. Shank 13 can be connected to end plate portion 11 by a neck 14. Alternatively, in a way not shown but obvious to a skilled person, shank 13 can be connected directly to end plate portion 11.

The plate end portion 11 is configured to fit a screw threaded nut 21 of an end fitting 22 of a hose 20, in such a way that eyelet 12 matches the screw threaded hole 23 of nut 21. End fitting 22 is secured to hose 20 by a sleeve 24 in a known way, not described further.

According to the invention, end wings 13a and 13b of shank 13 are connected to each other and to terminal 15a of cable 15 by a weld bead 16.

This technique allows for greater resistance to tearing to the coupling between terminal 15a of cable 15 to shank 13, namely between the portion of cable 15 and end plate portion 11.

In particular, weld bead 16 connects by welding the metal cable 15 and the shank 13.

A comparison between systems of the prior art and the invention showed a relevant increase of the connection of the resistance of the cable lug up to rupture.

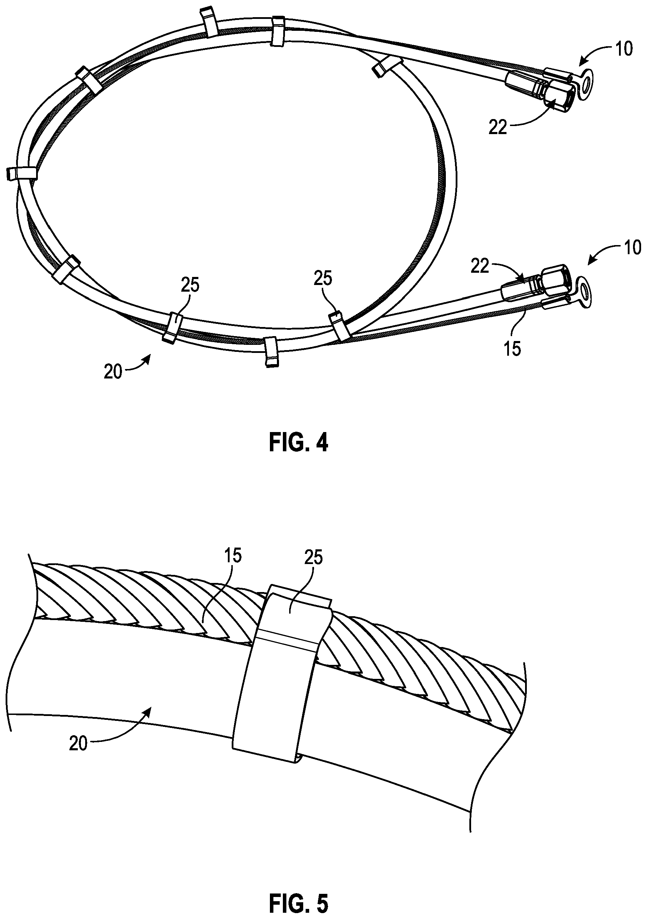

As shown in figures 4 and 5 the cable lug 10 and the hose 20 can be fitted to a high pressure fitting 30 of a high-pressure machine 31, of which a part is shown. For example, the hose 20 can be used for charging high pressure cylinders with gas. Multiple charging can be made, as shown in figure 5 by connecting the cable lug 10 and hose 20 according to the invention to respective fittings 30.

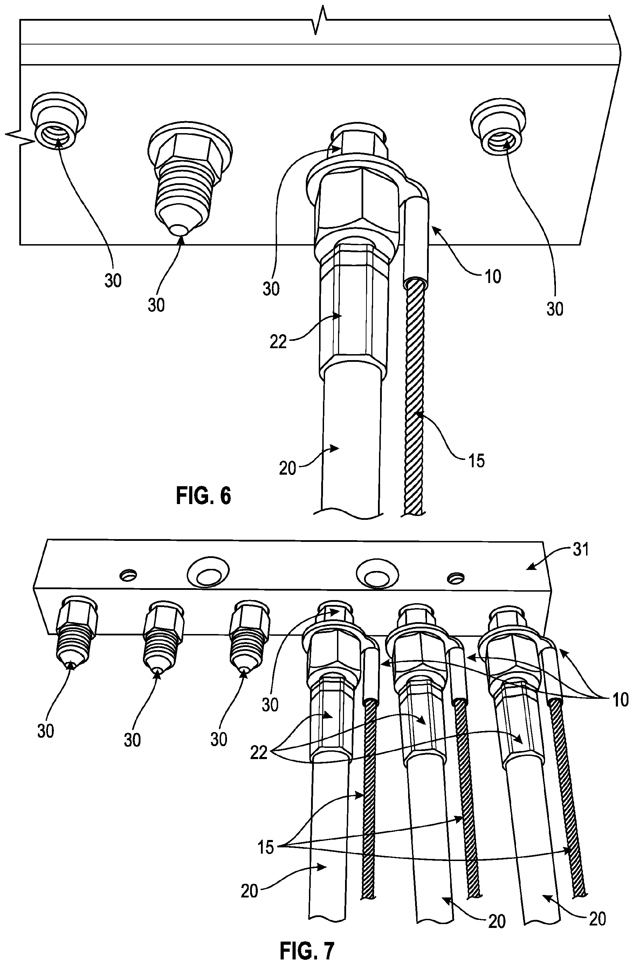

Cable lug 10 and hose 20 can be provided together connected by cable ties 25, as shown in figures 6 and 7.

According to another aspect of the invention a possible embodiment of the method for connecting the cable lug to the cable is described below.

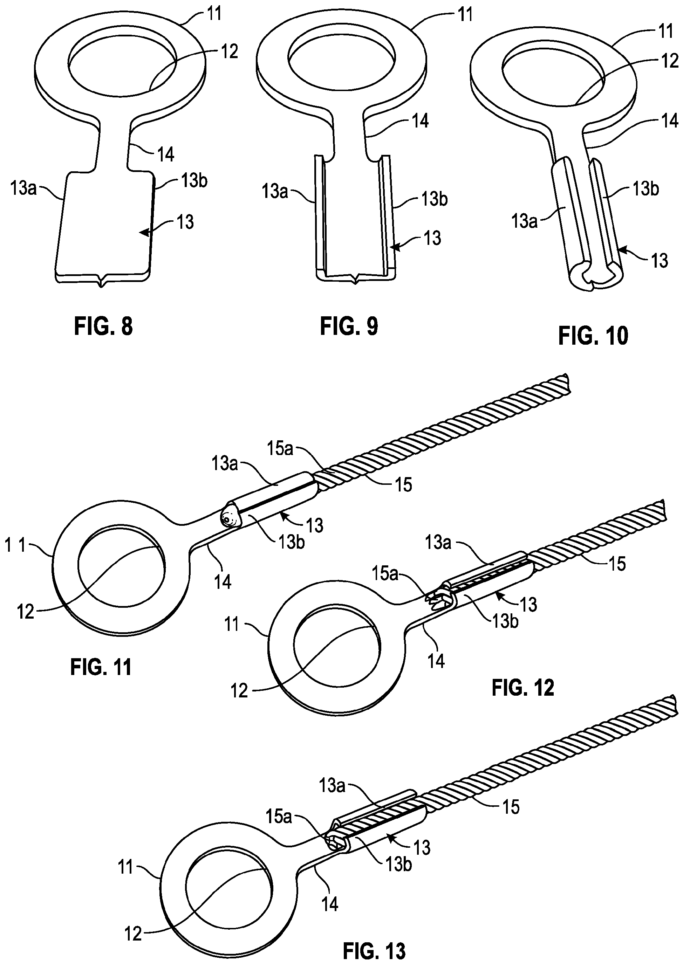

As shown in Fig. 8, 9, 10 shank 13 is initially flat, and the wings 13a and 13b are progressively bent by shaping in a way known by a skilled person. Eventually, shank 13 achieves a substantially tubular shape, in which the terminal 15a of cable 15 is inserted, as shown in fig. 11 and then Fig 12.

The cross section of cable 15 and of shank 13 substantially coincide, with sufficient backlash, as known by a skilled person. For example, terminal 15a of cable 15 protrudes between 1 and 5mm from shank 13.

Then the wings 13a and 13b are further bent by pressing, for example by a crimping tool in one or two steps, as depicted in Figs 12 and 13.

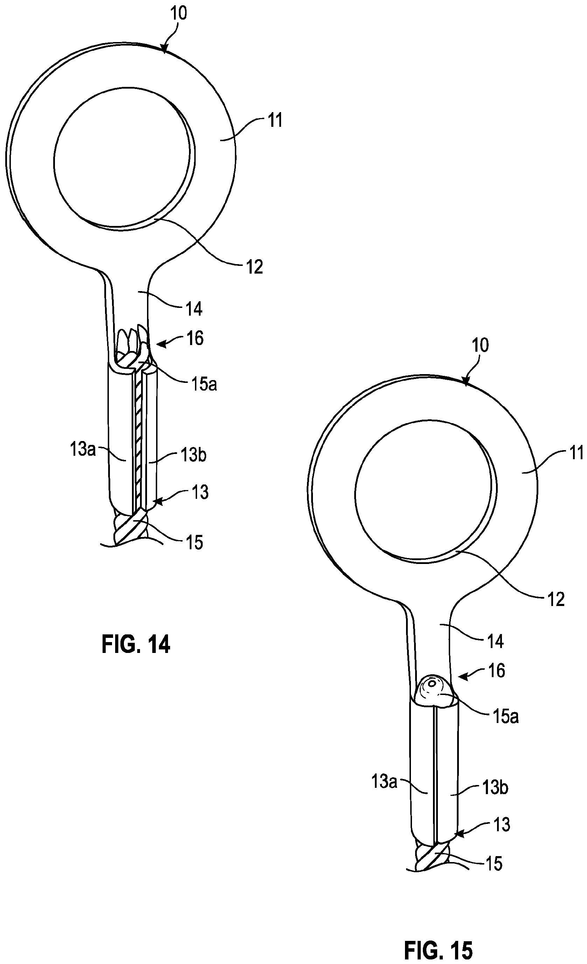

Finally, the crimped ends 13a and 13b are welded together as shown in figures 14 and 15, forming weld bead 16. For example, a TIG welding process can be used.

Preferably, also terminal 15 is welded along with wings 13a and 13b of shank 13 forming weld bead 16.

Alternatively, weld bead 16 can be made at wings 13a and 13b involving the portion of shank 13 facing end plate portion 11.

The union of the two wings 13a and 13 of shank 13 of cable lug 10 and the terminal 15a of cable 15, in particular a steel cable, are prevented from disconnecting from each other and from widening even in case of very strong pulling forces. The same resistance of the cable is therefore achieved.

This gives greater tear resistance which allows the cable lug to be used as the end part of the metal cable in applications that were previously reserved for cable lugs of the loop type like those shown in US2006218756A1 or WO2013149631A1.

As shown in the figures, cable lug after welding can be bent by 90° at neck 14. Of course, in case of different end fittings such bending cannot be necessary or it can be less than 90°.

The cable lug and the cable can be for example made of 316 steel shaped sheet metal with the end part prepared for coupling with a metal cable of a suitable section by pressing (see Fig. no. 6).

## Claims

1. A system of a cable (15), a cable lug (10) and a hose (20),
wherein said cable (15) is made of metal, wherein said cable has a terminal (15a), and is configured for restraining said hose from whipping in case of accidental rupture,
wherein said cable lug (10) is made of metal and comprises an end plate portion (11), with an eyelet (12) and a hollow shank (13),
wherein the shank (13) is defined by two opposite wings (13a, 13b), wherein the wings (13a, 13b) are arranged to grip said terminal (15a), wherein the hose (20) has an end fitting (22) and said plate end portion (11) of the cable lug (10) is arranged to fit the end fitting (22), and wherein
said wings (13a, 13b) of said shank (13) are connected to each other and to said terminal (15a) by a weld bead (16).

2. The system of claim (1), wherein the end fitting (22) comprises a screw threaded nut (21) and the eyelet (12) of the end portion (11) is configured to match a screw threaded hole (23) of the nut (21).

3. The system of claim (1), wherein the end fitting (22) is secured to the hose (20) by a sleeve (24).

4. The system of claim (1), wherein the hose (20) is secured to the cable (15) by ties (25).

5. The system of claim (1), wherein said hose (20) comprises two end fittings and said cable comprises two cable lugs (10) arranged at respective ends.

6. A method for making the system of claim 1 comprising the steps of:
- providing the hose (20), the cable lug (10) and the cable (15), wherein making the cable lug (10) comprises the steps of:
- providing a flat shank blank portion (13) connected to an end plate portion (11);
- progressively bending the flat shank portion obtaining bent wings (13a, 13b) defining a tubular shank;
- arranging a terminal (15a) of a cable (15) in said shank;
- further bending said wings (13a,13b) up to gripping said cable (15);
- welding said wings (13a,13b) forming a weld bead (16) connecting said wings (13a, 13b).

7. The method of claim 6, wherein said terminal (15a) is welded along with said wings (13a,13b) of said shank (13) forming said weld bead (16).

8. The method of claim 6, wherein a TIG welding process is used for said step of welding said ends.

9. The method of claim 6, wherein said weld bead (16) is made to connect said wings (13a, 13b) and said cable (15) at a portion of said shank (13) facing said end plate portion (11).

## Patentansprüche

1. Ein System aus einem Kabel (15), einem Kabelschuh (10) und einem Schlauch (20),
wobei das Kabel (15) aus Metall hergestellt ist, wobei das Kabel ein Endteil (15a) aufweist und konfiguriert ist, um den Schlauch im Falle eines versehentlichen Bruchs am Ausschlagen zu hindern,
wobei der Kabelschuh (10) aus Metall hergestellt ist und einen Plattenendabschnitt (11) mit einer Öse (12) und einem hohlen Schaft (13) umfasst,
wobei der Schaft (13) durch zwei gegenüberliegende Laschen (13a,13b) definiert ist, wobei die Laschen (13a,13b) so angeordnet sind, dass sie das Endteil (15a) greifen, wobei der Schlauch (20) ein Endfitting (22) aufweist und der Plattenendabschnitt (11) des Kabelschuhs (10) so angeordnet ist, dass er zu dem bzw. auf den Endfitting (22) passt, und wobei
die Laschen (13a,13b) des Schafts (13) miteinander und mit dem Endteil (15a) durch eine Schweißraupe (16) verbunden sind.

2. Das System nach Anspruch 1, wobei das Endfitting (22) eine Gewindemutter (21) umfasst und die Öse (12) des Endabschnitts (11) konfiguriert ist, um zu einem Gewindeloch (23) der Mutter (21) zu passen.

3. Das System nach Anspruch (1), wobei das Endfitting (22) durch eine Muffe (24) an dem Schlauch (20) befestigt ist.

4. Das System nach Anspruch 1, wobei der Schlauch (20) durch Binder (25) an dem Kabel (15) befestigt ist.

5. Das System nach Anspruch 1, wobei der Schlauch (20) zwei Endfittings und das Kabel zwei an jeweiligen Enden angeordnete Kabelschuhe (10) aufweist.

6. Ein Verfahren zum Herstellen des Systems nach Anspruch 1, das die folgenden Schritte umfasst:
- Bereitstellen des Schlauchs (20), des Kabelschuhs (10) und des Kabels (15), wobei die Herstellung des Kabelschuhs (10) die folgenden Schritte umfasst:
- Bereitstellen eines flachen Schaftrohlings (13), der mit einem Plattenendabschnitt (11) verbunden ist;
- fortschreitendes Biegen des flachen Schaftabschnitts, um gebogene Laschen (13a,13b) zu erhalten, die einen röhrenförmigen Schaft definieren;
- Anordnen eines Endteils (15a) eines Kabels (15) in dem Schaft;
- weiteres Biegen der Laschen (13a,13b) bis zum Ergreifen des Kabels (15);
- Schweißen der Laschen (13a,13b) unter Bildung einer Schweißraupe (16), die die Laschen (13a,13b) verbindet.

7. Das Verfahren nach Anspruch 6, wobei der Endteil (15a) zusammen mit den Laschen (13a,13b) des Schafts (13) geschweißt wird, um die Schweißraupe (16) zu bilden.

8. Das Verfahren nach Anspruch 6, wobei ein WIG-Schweißverfahren für den Schritt des Schweißens der Enden verwendet wird.

9. Das Verfahren nach Anspruch 6, wobei die Schweißraupe (16) so hergestellt wird, dass sie die Laschen (13a,13b) und das Kabel (15) an einem Abschnitt des Schafts (13) verbindet, der dem Plattenendabschnitt (11) zugewandt ist.

## Revendications

1. Système d'un câble (15), d'une cosse de câble (10) et d'un flexible (20),
dans lequel ledit câble (15) est constitué de métal, dans lequel ledit câble comporte une borne (15a), et est configuré pour empêcher ledit flexible de donner un coup de fouet en cas de rupture accidentelle, dans lequel ladite cosse de câble (10) est constituée de métal et comprend une partie de plaque d'extrémité (11), avec un oeillet (12) et une tige creuse (13),
dans lequel la tige (13) est définie par deux ailes opposées (13a, 13b),
dans lequel les ailes (13a, 13b) sont agencées pour enserrer ladite borne (15a),
dans lequel le flexible (20) comporte un raccord d'extrémité (22) et ladite partie d'extrémité de plaque (11) de la cosse de câble (10) est agencée pour s'adapter au raccord d'extrémité (22), et dans lequel
lesdites ailes (13a, 13b) de ladite tige (13) sont connectées les unes aux autres et à ladite borne (15a) par un cordon de soudure (16).

2. Système selon la revendication (1), dans lequel le raccord d'extrémité (22) comprend un écrou de vis fileté (21) et l'oeillet (12) de la partie d'extrémité (11) est configuré pour correspondre à un trou de vis fileté (23) de l'écrou (21).

3. Système selon la revendication (1), dans lequel le raccord d'extrémité (22) est fixé au flexible (20) par un manchon (24).

4. Système selon la revendication (1), dans lequel le flexible (20) est fixé au câble (15) par des attaches (25).

5. Système selon la revendication (1), dans lequel ledit flexible (20) comprend deux raccords d'extrémité et ledit câble comprend deux cosses de câble (10) disposées aux extrémités respectives.

6. Procédé de fabrication du système selon la revendication 1 comprenant les étapes de :
- fourniture du flexible (20), de la cosse de câble (10) et du câble (15), dans lequel la fabrication de la cosse de câble (10) comprend les étapes de :
- fourniture d'une partie d'ébauche de tige plate (13) connectée à une partie de plaque d'extrémité (11) ;
- pliage progressif de la partie de tige plate pour obtenir des ailes pliées (13 a, 13b) définissant une tige tubulaire ;
- disposition d'une borne (15a) d'un câble (15) dans ladite tige ;
- pliage supplémentaire desdites ailes (13a, 13b) jusqu'à l'enserrage dudit câble (15) ;
- soudage desdites ailes (13a, 13b) en formant un cordon de soudure (16) connectant lesdites ailes (13a, 13b).

7. Procédé selon la revendication 6, dans lequel ladite borne (15a) est soudée conjointement auxdites ailes (13a, 13b) de ladite tige (13) formant ledit cordon de soudure (16).

8. Procédé selon la revendication 6, dans lequel un procédé de soudage TIG est utilisé pour ladite étape de soudage desdites extrémités.

9. Procédé selon la revendication 6, dans lequel ledit cordon de soudure (16) est réalisé pour connecter lesdites ailes (13a, 13b) et ledit câble (15) au niveau d'une partie de ladite tige (13) faisant face à ladite partie de plaque d'extrémité (11).
